# EUROPÄISCHE PATENTSCHRIFT

(11) **EP 2 152 458 B1**
(45) Veröffentlichungstag und Bekanntmachung des Hinweises auf die Patenterteilung: **18.08.2010**
(21) Anmeldenummer: 08750180.5
(22) Anmeldetag: 08.05.2008
(51) Int. Cl.: B23D 65/00, B23D 59/02

(54) **VERFAHREN ZUR HERSTELLUNG EINES KÜHLKANÄLE AUFWEISENDEN KREISSÄGEBLATTES**
METHOD FOR THE PRODUCTION OF A CIRCULAR SAW BLADE HAVING A COOLING CHANNEL
PROCÉDÉ POUR FABRIQUER UNE LAME DE SCIE CIRCULAIRE COMPORTANT DES CANAUX DE REFROIDISSEMENT

(30) Priorität: 12.05.2007 DE 102007022310
(43) Veröffentlichungstag der Anmeldung: 17.02.2010
(73) Patentinhaber: Friedrichs, Arno, 95326 Kulmbach (DE)
(72) Erfinder: Friedrichs, Arno, 95326 Kulmbach (DE)
(74) Vertreter: Eichstädt, Alfred
(86) Internationale Anmeldenummer: PCT/EP2008/055670
(87) Internationale Veröffentlichungsnummer: WO 2008/138847

(56) Entgegenhaltungen:
- CH-A5- 598 927
- DE-A1- 3 708 360
- DE-U1- 8 002 739
- DE-U1- 8 002 782
- DE-U1- 29 901 713

## Beschreibung

Die Erfindung betrifft ein Verfahren zur Herstellung eines Kühlkanäle aufweisenden Kreissägeblattes. Des Weiteren betrifft die Erfindung ein Kühlkanäle aufweisendes Kreissägeblatt.

Kreissägeblätter, welche zwei parallel zueinander verlaufende Stahlscheiben aufweisen, zwischen welche im Betrieb der Kreissäge ein Kühlmedium einbringbar ist, sind bereits bekannt.

Beispielsweise ist aus dem deutschen Gebrauchsmuster 80 02 739 U1 eine Vorrichtung zum Aufspannen eines Sägeblattes bekannt. Das Mittelteil dieses Sägeblattes besteht aus zwei voneinander in Abstand befindlichen Stahlkernen, zwischen denen ein Hohlraum gebildet ist. In diesen Hohlraum kann eine Kühlflüssigkeit eingebracht werden. Zu diesem Zweck sind die beiden Stahlkerne zwischen zwei Flanschkörpern eingespannt, von denen der eine zugleich als Einlaufkanal für die Kühlflüssigkeit ausgebildet ist.

Aus dem weiteren deutschen Gebrauchsmuster DE 80 02 782 U1 ist ein Sägeblatt bekannt, welches ebenfalls zwei zueinander in Abstand befindliche Stahlkerne aufweist, zwischen denen ein Hohlraum gebildet ist. In diesen Hohlraum kann eine Kühlflüssigkeit eingebracht werden, die am Außenumfang des Sägeblattes wieder austritt. Zwischen den Stahlkernen sind einzelne Distanzstücke vorgesehen, bei denen es sich beispielsweise um gummi- oder kunststoffelastische Distanzstücke handelt. Diese sind mit den Stahlkernen fest verbunden und tragen im Betrieb des Sägeblattes zur Geräuschdämmung bei.

Aus der DE 37 08 360 A1 ist ein Kreissägeblatt bekannt, welches ein Stammblatt mit am äußeren Umfang verteilt angeordneten Schneidelementen und eine mittige Öffnung zum Durchführen einer Antriebswelle aufweist. Das Stammblatt besteht aus zwei zueinander parallelen, über Distanzmittel voneinander beabstandeten Scheiben, zwischen denen Strömungswege für ein Kühlmedium mit mindestens einer Einströmöffnung sowie am äußeren Umfang des Stammblattes zwischen den Schneidelementen mündenden Austrittsöffnungen gebildet ist. Die Distanzmittel sind von im Wesentlichen radial sowie über den Umfang des Stammblattes verteilt angeordneten, länglichen Speichenelementen gebildet, die zwischen sich die Strömungswege bilden. Die Speichenelemente sind auf ihrer der mittigen Öffnung zugekehrten Seite einstückig mit einem inneren, die mittige Öffnung umschließenden Scheibenring verbunden. Als Einströmöffnungen für das Kühlmedium weist zumindest eine der beiden Scheiben des Stammblattes in ihrem radial auβerhalb des inneren Scheibenringes liegenden Bereich in die Strömungswege mündende Durchgangsöffnungen auf. Bei der Herstellung eines derartigen Stammblattes müssen die beiden Scheiben und die dazwischen vorgesehene Distanzscheibe miteinander verbunden werden, beispielsweise durch eine Verklebung oder durch eine Punktverschweißung. Die Distanzscheibe selbst kann durch Ausstanzen oder Laserschneiden vorgefertigt werden. Andere sägeblätter sind aus DE 299 01 713 U und CH 598 927 A bekannt.

Die Aufgabe der Erfindung besteht darin, ein Verfahren zur Herstellung eines Kühlkanäle aufweisenden Kreissägeblattes aufzuzeigen, mittels welchem in einfacher Weise Kühlkanäle eines vorgegebenen Querschnittes hergestellt werden können.

Diese Aufgabe wird durch ein Verfahren mit den im Anspruch 1 angegebenen Merkmalen gelöst. Vorteilhafte Ausgestaltungen und Weiterbildungen der Erfindung ergeben sich aus den abhängigen Ansprüchen 2 - 8. Der Anspruch 9 hat ein Kreissägeblatt zum Gegenstand. Die Ansprüche 10 - 17 betreffen vorteilhafte Ausgestaltungen und Weiterbildungen eines Kreissägeblattes mit den im Anspruch 9 angegebenen Merkmalen.

Die Vorteile der Erfindung bestehen darin, dass mittels des beanspruchten Verfahrens Kühlkanäle aufweisende einteilige Kreissägeblätter hergestellt werden können. Ein Verkleben, Verschweißen oder Verschrauben mehrerer unterschiedlicher fester Ausgangsmaterialien ist nicht notwendig. Des Weiteren können mittels des erfindungsgemäßen Verfahrens Kühlkanäle aufweisende Kreissägeblätter aus Hartmetall oder Keramik hergestellt werden. Das Material dieser Kreissägeblätter ist bereits derart hart, dass bei diesen Kreissägeblättern auf ein zusätzliches Aufbringen von Schneidkanten, beispielsweise aus Diamant, verzichtet werden kann.

Weitere Vorteile der Erfindung bestehen darin, dass mittels des beanspruchten Verfahrens Kühlkanäle aufweisende Kreissägeblätter hergestellt werden können, bei denen die Kühlkanäle über ihre gesamte Länge jeweils dieselbe Querschnittsfläche aufweisen. Dies erlaubt ein gezieltes Einbringen der Kühlflüssigkeit in den Schneidenbereich des Sägeblattes. Die Austrittsstellen der Kühlflüssigkeit werden in vorteilhafter Weise in den Fußbereich oder mittleren Bereich der in das Kreissägeblatt eingebrachten Schneidezähne gelegt.

Den mittels des erfindungsgemäßen Verfahrens hergestellten Kreissägeblättern können in einfacher Weise Kühlkanäle einer gewünschten Form und auch Kühlkanäle einer Querschnittsfläche gewünschter Größe gegeben werden. Eine gewünschte Form der Kühlkanäle, beispielsweise eine runde, ovale oder eckige Form der Kühlkanäle, kann dadurch vorgegeben werden, dass die im Anspruch 1 angegebenen fadenförmigen Körper einen runden, ovalen oder eckigen Querschnitt aufweisen. Nach dem späteren Entfernen dieser fadenförmigen Körper aus dem zusammengedrückten Scheibenpaar verbleiben im zusammengedrückten Scheibenpaar Kühlkanäle mit einer runden, ovalen oder eckigen Querschnittsfläche. Zur Erzeugung von Kühlkanälen, deren Querschnittsfläche eine gewünschte Größe aufweist, wird die Querschnittsfläche der verwendeten fadenförmigen Körper in gewünschter Weise gewählt. Nach dem späteren Entfernen dieser fadenförmigen Körper aus dem zusammengedrückten Scheibenpaar verbleiben im zusammengedrückten Scheibenpaar Kühlkanäle mit der gewünschten Querschnittsfläche.

Ein weiterer Vorteil der Erfindung besteht darin, dass mittels des beanspruchten Verfahrens Kühlkanäle aufweisende Kreissägeblätter hergestellt werden können, deren Kühlkanäle einen sehr kleinen Durchmesser aufweisen. Dieser Durchmesser ist vorzugsweise kleiner oder gleich 3 mm. Dies hat den Vorteil, dass auch die Dicke des Kreissägeblattes insgesamt klein gewählt werden kann. Bekannte Kreissägeblätter mit integrierten Kühlkanälen weisen im Unterschied dazu eine wesentlich größer Dicke auf.

Eine vorteilhafte Weiterbildung besteht darin, auch in Umfangsrichtung Kühlkanäle vorzusehen, durch welche zwei oder mehr der in Radialrichtung verlaufenden Kühlkanäle miteinander verbunden sind. Dies hat den Vorteil, dass im Falle einer im Betrieb des Kreissägeblattes auftretenden Verstopfung eines Kühlkanals über einen in Umfangsrichtung verlaufenden Kühlkanal dennoch Kühlflüssigkeit in den verstopften Kühlkanal eingebracht und zur gewünschten Austrittsstelle transportiert werden kann. Dabei wird die verstopfte Stelle des Kühlkanals umgangen.

Vorzugsweise ist die Querschnittsfläche der in Umfangsrichtung verlaufenden Kühlkanäle größer als die Querschnittsfläche der in Radialrichtung verlaufenden Kühlkanäle, so dass auch bei ungünstigen Arbeitsbedingungen alle Kühlflüssigkeitsaustrittsstellen des Kreissägeblattes mit ausreichend Kühlflüssigkeit versorgt werden können.

In vorteilhafter Weise weist ein Kreissägeblatt gemäß der Erfindung in seinem radial inneren Bereich, d. h. in dem an die zentrale Bohrung angrenzenden Bereich des Kreissägeblattes, eine in Umfangsrichtung verlaufende Nut auf, durch welche die in Radialrichtung verlaufenden Kühlkanäle miteinander in Verbindung stehen. Dies hat den Vorteil, dass Kühlflüssigkeitszuführöffnungen der in die zentrale Bohrung eingesetzten Welle der Kreissäge nicht exakt in radialer Verlängerung zu den radial verlaufenden Kühlkanälen des Kreissägeblattes verlaufen müssen. Es ist vollkommen ausreichend, wenn durch die Kühlflüssigkeitsaustrittsöffnungen der Welle eine ausreichende Menge an Kühlflüssigkeit in die genannte Nut des Kreissägeblattes eingebracht wird.

Der vorstehend beschriebene Effekt wird auch dann erzielt, wenn die genannte, in Umfangsrichtung verlaufende Nut nicht im Kreissägeblatt, sondern in den Außenmantel der Welle eingebracht wird. Eine Verbesserung dieses Effektes kann dadurch herbeigeführt werden, dass das Kreissägeblatt und der Außenmantel der Welle jeweils mit einer derartigen umlaufenden Nut versehen werden.

Nachfolgend wird die Erfindung anhand der Figuren beispielhaft erläutert. Es zeigen
- die Figuren 1 - 8 Skizzen zur Erläuterung eines Verfahrens gemäß der Erfindung,
- die Figur 9 eine Skizze eines Kreissägeblattes gemäß einem ersten Ausführungsbeispiel für die Erfindung,
- die Figur 10 eine Skizze eines Kreissägeblattes gemäß einem zweiten Ausführungsbeispiel für die Erfindung,
- die Figur 11 eine Skizze eines Kreissägeblattes gemäß einem dritten Ausführungsbeispiel für die Erfindung,
- die Figur 12 eine Skizze eines Kreissägeblattes gemäß einem vierten Ausführungsbeispiel für die Erfindung und
- die Figur 13 eine Skizze des Kreissägeblattes gemäß dem vierten Ausführungsbeispiel mit in das Kreissägeblatt eingebrachten Zähnen.

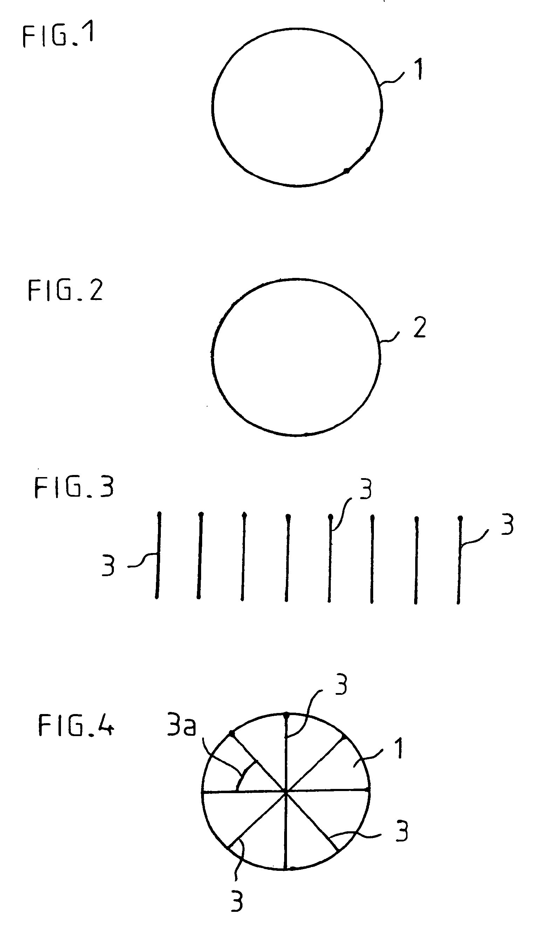

Die Figuren 1 - 8 zeigen Skizzen zur Erläuterung eines Verfahrens zur Herstellung eines Kühlkanäle aufweisenden Kreissägeblattes.

Zur Durchführung dieses Verfahrens werden eine erste kreisförmige Scheibe 1, wie sie in der Figur 1 veranschaulicht ist, eine zweite kreisförmige Scheibe 2, wie sie in der Figur 2 gezeigt ist, und eine Vielzahl von fadenförmigen Körpern 3, wie sie in der Figur 3 abgebildet sind, bereitgestellt.

Die Abmessungen der Scheiben 1 und 2 stimmen überein. Die Scheiben 1 und 2 bestehen aus ein und demselben plastischen Material. Bei diesem plastischem Material handelt es sich um mit einem Plastifizierer versehenes Hartmetallpulver oder um mit einem Plastifizierer versehenes Keramikpulver oder um mit einem Plastifizierer versehenes Stahlpulver. Die Konsistenz dieses plastischen Material ist derart, dass sich die Scheiben durch Ausüben von flächenförmigem Druck ohne Weiteres verformen lassen.

Bei den fadenförmigen Körpern 3, deren Länge jeweils dem Radius der Scheiben 1 und 2 entspricht oder jeweils etwas größer ist als der Radius der Scheiben 1 und 2, handelt es sich entweder um Körper aus einem Material, welches sich bei Anwendung einer hohen Temperatur verflüchtigt, oder um Körper aus einem Material, welches sich bei Anwendung einer hohen Temperatur verflüssigt. Beispielsweise handelt es sich bei den fadenförmigen Körpern um parafingetränkte Fäden. Die Querschnittsfläche dieser fadenförmigen Körper 3 ist vorzugsweise rund, kann aber - sofern dies gewünscht ist - auch oval oder eckig sein. Der Durchmesser und die Querschnittsfläche aller fadenförmigen Körper 3 stimmen überein. Der Durchmesser liegt beispielsweise im Bereich zwischen 0,05 mm und 3 mm.

In einem ersten Schritt werden die fadenförmigen Körper 3 auf die erste kreisförmige Scheibe 1 derart aufgelegt, dass jeder der fadenförmigen Körper in Radialrichtung ausgerichtet ist. Dies ist in der Figur 4 veranschaulicht, aus welcher ersichtlich ist, dass die fadenförmigen Körper 3 nach dem Auflegen auf die Scheibe 1 in ihrer Gesamtheit einen Stern bilden, dessen Mittelpunkt der Mittelpunkt der Scheibe 1 ist und dessen Strahlen sich vom Mittelpunkt aus in Richtung bis zum äußeren Rand der Scheibe erstrecken oder - wenn die fadenförmigen Körper länger sind als der Radius der Scheibe 1 - über den äußeren Rand der Scheibe 1 hinausragen.

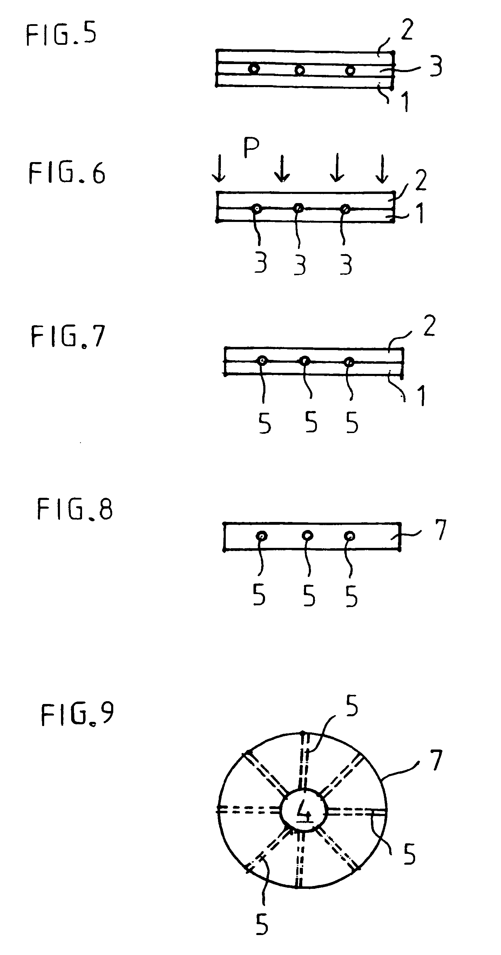

In einem nachfolgenden Schritt wird die zweite kreisförmige Scheibe 2 auf die erste kreisförmige Scheibe 1 und die darauf aufliegenden fadenförmigen Körper 3 aufgelegt. Dies ist in der Figur 5 veranschaulicht, die eine schematische Seitenansicht der Scheiben 1 und 2 und der dazwischen positionierten fadenförmigen Körper 3 zeigt.

Im nächsten Schritt des Verfahrens wird auf die zweite Scheibe 2 Druck P ausgeübt, der in Richtung der ersten Scheibe 1 gerichtet ist. Dies ist in der Figur 6 veranschaulicht, aus welcher ersichtlich ist, dass nach der Ausübung des Druckes P die beiden Scheiben 1 und 2 ein zusammengedrücktes Scheibenpaar bilden, welches an allen Stellen, an welchen keine fadenförmigen Körper 3 positioniert sind, unmittelbar in Kontakt stehen, und an den Stellen, an welchen fadenförmige Körper 3 positioniert sind, durch diese fadenförmigen Körper 3 voneinander beabstandet sind. Die Querschnittsfläche jedes der fadenförmigen Körper 3 hat sich bei der genannten Ausübung von Druck P nicht verändert. Dies bedeutet, dass die fadenförmigen Körper 3 während des Zusammendrückens der Scheiben 1 und 2 als Platzhalter dienen.

Im darauffolgenden Schritt des Verfahrens werden die fadenförmigen Körper 3 aus dem zusammengedrückten Scheibenpaar 1, 2 entfernt.

Handelt es sich bei den fadenförmigen Körpern 3 um Körper, die aus einem Material bestehen, welches sich bei Anwendung einer hohen Temperatur verflüchtigt, dann wird zur Entfernung der fadenförmigen Körper 3 das Scheibenpaar der genannten hohen Temperatur, welche beispielsweise bei 200°C liegt, ausgesetzt. Dies führt dazu, dass sich die fadenförmigen Körper 3 verflüchtigen, so dass im zusammengedrückten Scheibenpaar durchgehende Kühlkanäle 5 entstehen, deren Querschnittsfläche mit der Querschnittsfläche der fadenförmigen Körper 3 übereinstimmt. Dies ist in der Figur 7 veranschaulicht, aus welcher ersichtlich ist, dass nach der Verflüchtigung der fadenförmigen Körper 3 im zusammengedrückten Scheibenpaar 1, 2 Kühlkanäle 5 mit runder Querschnittsfläche verbleiben.

Handelt es sich bei den fadenförmigen Körpern 3 hingegen um Körper, die aus einem Material bestehen, welches sich bei Anwendung einer hohen Temperatur verflüssigt, dann wird zur Entfernung der fadenförmigen Körper 3 das Scheibenpaar der genannten hohen Temperatur ausgesetzt. Dies führt dazu, dass sich die fadenförmigen Körper 3 verflüssigen. Diese gebildete Flüssigkeit fließt aus den zusammengedrückten Scheiben nach außen ab, so dass im zusammengedrückten Scheibenpaar durchgehende Kühlkanäle 5 verbleiben, deren Querschnittsfläche mit der Querschnittsfläche der fadenförmigen Körper 3 übereinstimmt. Dies ist in der Figur 7 veranschaulicht, aus welcher ersichtlich ist, dass nach der Verflüssigung der fadenförmigen Körper 3 im zusammengedrückten Scheibenpaar 1,2 Kühlkanäle 5 mit runder Querschnittsfläche verbleiben.

Gemäß einer weiteren Ausführungsform der Erfindung können die fadenförmigen Körper auch aus einem festen Material bestehen und das Entfernen der fadenförmigen Körper aus dem zusammengedrückten Scheibenpaar durch ein in Radialrichtung nach außen erfolgendes Herausziehen der fadenförmigen Körper 3 aus dem zusammengedrückten Scheibenpaar erfolgen. Bei dieser weiteren Ausführungsform ist die Länge der fadenförmigen Körper 3 so gewählt, dass sie größer ist als der Radius der Scheiben 1 und 2, um ein Ergreifen der fadenförmigen Körper zum Zwecke deren Herausziehens zu ermöglichen. Bei dieser Ausführungsform ist dafür Sorge zu tragen, dass es beim Herausziehen der fadenförmigen Körper 3 aus dem Scheibenpaar 1, 2 nicht zu einer Deformierung der gebildeten Kühlkanäle kommt.

Im nächsten Verfahrensschritt erfolgt ein Versintern des Scheibenpaares 1, 2 zum Erhalt eines in Radialrichtung verlaufende Kühlkanäle 5 aufweisenden Kreissägeblattes 7. Dies ist in der Figur 8 veranschaulicht, aus welcher auch ersichtlich ist, dass es sich bei dem Kühlkanäle 5 aufweisenden Kreissägeblatt 7 um ein einteiliges Kreissägeblatt handelt, welches aus einem einzigen Material besteht. Bei diesem Material handelt es sich um Hartmetall, Keramik oder Stahl.

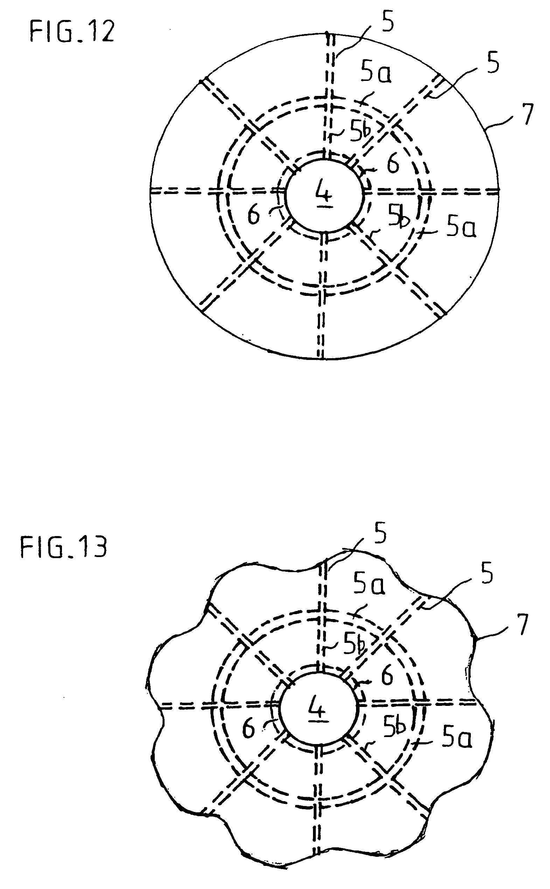

Da ein Kreissägeblatt auf einer Welle der Kreissäge befestigt werden muss, besteht die Notwendigkeit, in das Scheibenpaar 1, 2 eine zentrale Bohrung 4 einzubringen, wie sie beispielsweise in der Figur 9 gezeigt ist. Dieses Einbringen der zentralen Bohrung 4 in das Scheibenpaar 1, 2 erfolgt entweder vor oder nach dem Versintern des Scheibenpaares mittels eines geeigneten Werkzeugs, beispielsweise eines geeigneten Bohr- oder Drehwerkzeuges. Des Weiteren weist ein Kreissägeblatt entlang seines Auβenumfanges in der Regel Zähne auf, wie sie beispielsweise in der Figur 13 veranschaulicht sind. Das Einbringen dieser Zähne in das Scheibenpaar kann ebenfalls entweder vor oder nach dem Versintern des Scheibenpaares mittels eines geeigneten Werkzeuges vorgenommen werden, beispielsweise mittels geeigneter Schleifscheiben.

Eine vorteilhafte Weiterbildung eines Verfahrens gemäß der Erfindung besteht darin, zusätzlich zu den in der Figur 4 veranschaulichten, in Radialrichtung ausgerichteten fadenförmigen Körpern 3 auch in Umfangsrichtung ausgerichtete weitere fadenförmige Körper 3a auf die erste Scheibe 1 aufzulegen. Ein derartiger weiterer fadenförmiger Körper 3a ist in der Figur 4 veranschaulicht. Dadurch entstehen nach dem Entfernen aller fadenförmigen Körper aus dem zusammengedrückten Scheibenpaar nicht nur in Radialrichtung gerichtete Kühlkanäle, sondern auch in Umfangsrichtung verlaufende Kühlkanäle, durch welche die in Radialrichtung verlaufenden Kühlkanäle miteinander in Verbindung stehen. Dies hat den Vorteil, dass im Falle einer Verstopfung eines der in Radialrichtung verlaufenden Kühlkanäle ein Kühlflüssigkeitsaustausch zwischen benachbarten, in Radialrichtung verlaufenden Kühlkanälen erfolgen kann, so dass trotz der genannten Verstopfung eines Kühlkanals die notwendige Menge an Kühlflüssigkeit an alle gewünschten Kühlflüssigkeitsaustrittsstellen des Kreissägeblattes gelangen kann.

Die in Umfangsrichtung verlaufenden Kühlkanäle weisen vorzugsweise eine größere Querschnittsfläche auf als die in Radialrichtung verlaufenden Kühlkanäle, um auch bei ungünstigen Platzverhältnissen mit einer geringeren Anzahl von Kühlkanälen im Zentrum eine größere Anzahl von Kühlkanälen mit Kühlmittel versorgen zu können.

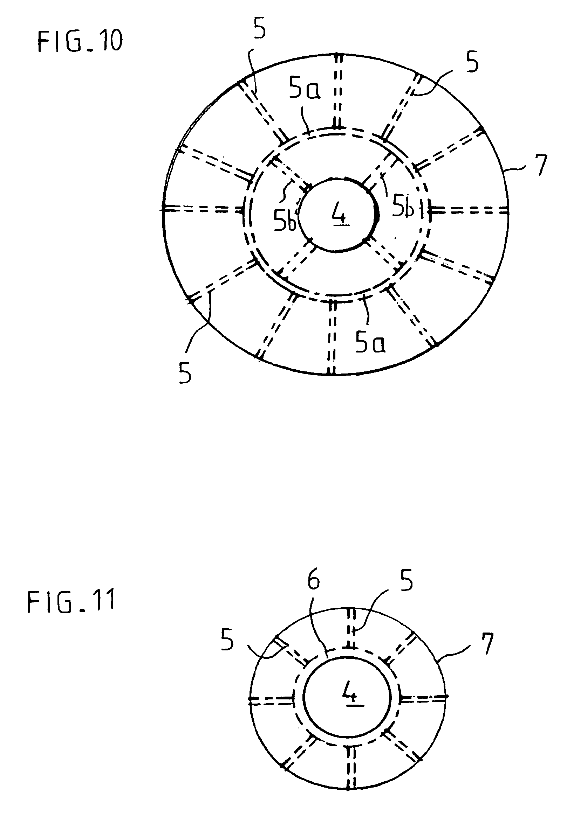

Eine andere vorteilhafte Weiterbildung besteht darin, das Kreissägeblatt in seinem radial inneren Bereich, der an die zentrale Bohrung 4 angrenzt, mit einer in Umfangsrichtung verlaufenden Nut 6 zu versehen, durch welche die radial verlaufenden Kühlkanäle 5 miteinander verbunden sind. Eine derartige Nut 6 ist beispielsweise in der Figur 11 veranschaulicht. Dies hat den Vorteil, dass Kühlflüssigkeitsöffnungen der in die zentrale Bohrung 4 eingesetzten Welle der Kreissäge nicht exakt in radialer Verlängerung zu den radial verlaufenden Kühlkanälen des Kreissägeblattes verlaufen müssen. Es ist vollkommen ausreichend, wenn durch die Kühlflüssigkeitsaustrittsöffnungen der Welle eine ausreichende Menge an Kühlflüssigkeit in die genannte Nut 6 des Kreissägeblattes eingebracht wird.

Die Figur 9 zeigt eine Skizze eines Kreissägeblattes 7 gemäß einem ersten Ausführungsbeispiel für die Erfindung. Dieses Kreissägeblatt 7 weist in Radialrichtung verlaufende, gestrichelt gezeichnete Kühlkanäle 5 auf, die sich jeweils von der zentralen Bohrung 4 bis zum Außenumfang des Kreissägeblattes 7 erstrecken. Die Kühlkanäle 5 weisen jeweils über ihre gesamte Länge ein und dieselbe Querschnittsfläche auf.

Die Figur 10 zeigt eine Skizze eines Kreissägeblattes 7 gemäß einem zweiten Ausführungsbeispiel für die Erfindung. Dieses Kreissägeblatt weist in Radialrichtung verlaufende, gestrichelt gezeichnete Kühlkanäle 5, in Umfangsrichtung verlaufende, ebenfalls gestrichelt gezeichnete Kühlkanäle 5a und in Radialrichtung verlaufende, sich von der zentralen Bohrung 4 bis zu den in Umfangsrichtung verlaufenden Kühlkanälen 5a erstreckende Kühlkanäle 5b auf. Durch die Kühlkanäle 5a stehen die in Radialrichtung verlaufenden Kühlkanäle 5 und auch die Kühlkanäle 5a miteinander in Verbindung. Die Kühlkanäle 5 weisen jeweils über ihre gesamte Länge ein und dieselbe Querschnittsfläche auf. Die Kühlkanäle 5a weisen ebenfalls über ihre gesamte Länge ein und dieselbe Querschnittsfläche auf. Die Querschnittsfläche der Kühlkanäle 5a kann mit der Querschnittsfläche der Kühlkanäle 5 übereinstimmen oder größer sein als diese. Auch die Kühlkanäle 5b weisen über ihre gesamte Länge ein und dieselbe Querschnittsfläche auf. Diese kann größer sein als die Querschnittsfläche der Kühlkanäle 5 und auch größer sein als die Querschnittsfläche der Kühlkanäle 5a.

Die Figur 11 zeigt eine Skizze eines Kreissägeblattes gemäß einem dritten Ausführungsbeispiel für die Erfindung. Dieses Kreissägeblatt 7 weist in Radialrichtung verlaufende, gestrichelt gezeichnete Kühlkanäle 5 auf, die sich jeweils von einer Nut 6 bis zum Außenumfang des Kreissägeblattes 7 erstrecken. Die Kühlkanäle 5 weisen jeweils über ihre gesamte Länge ein und dieselbe Querschnittsfläche auf. Die Nut 6 ist der zentralen Bohrung 4 des Kreissägeblattes benachbart, verläuft in Umfangsrichtung und verbindet die Kühlkanäle 5 miteinander.

Die Figur 12 zeigt eine Skizze eines Kreissägeblattes gemäß einem vierten Ausführungsbeispiel für die Erfindung. Dieses Kreissägeblatt 7 weist in Radialrichtung verlaufende, gestrichelt gezeichnete Kühlkanäle 5 und 5b sowie in Umfangsrichtung verlaufende, ebenfalls gestrichelt gezeichnete Kühlkanäle 5a auf. Durch die Kühlkanäle 5a stehen die in Radialrichtung verlaufenden Kühlkanäle 5 und 5b miteinander in Verbindung. Die Kühlkanäle 5 weisen jeweils über ihre gesamte Länge ein und dieselbe Querschnittsfläche auf. Die Kühlkanäle 5a weisen ebenfalls über ihre gesamte Länge ein und dieselbe Querschnittsfläche auf. Die Querschnittsfläche der Kühlkanäle 5a kann mit der Querschnittsfläche der Kühlkanäle 5 übereinstimmen oder größer sein als diese. Auch die Kühlkanäle 5b weisen über ihre gesamte Länge ein und dieselbe Querschnittsfläche auf. Diese kann größer sein als die Querschnittsfläche der Kühlkanäle 5 und auch größer sein als die Querschnittsfläche der Kühlkanäle 5a. Weiterhin weist das Kreissägeblatt 7 eine sich in Umfangsrichtung erstreckende Nut 6 auf, die der zentralen Bohrung 4 des Kreissägeblattes 7 benachbart ist und die Kühlkanäle 5 miteinander verbindet.

Die Figur 13 zeigt eine Skizze des Kreissägeblattes 7 gemäß dem vierten Ausführungsbeispiel für die Erfindung mit in das Kreissägeblatt eingebrachten Zähnen. Es ist ersichtlich, dass die Zähne derart in den Außenumfang des Kreissägeblattes eingebracht sind, dass die Austrittsöffnungen der Kühlkanäle 5 im Bereich der Flankenmitten der Zähne liegen.

### Bezugszeichenliste

- 1: Erste kreisförmige Scheibe
- 2: zweite kreisförmige Scheibe
- 3: fadenförmiger Körper
- 3a: weiterer fadenförmiger Körper
- 4: zentrale Bohrung
- 5,5b: in Radialrichtung verlaufender Kühlkanal
- 5a: in Umfangsrichtung verlaufender Kühlkanal
- 6: Nut
- 7: Kreissägeblatt

- P: Druck

## Patentansprüche

1. Verfahren zur Herstellung eines Kühlkanäle aufweisenden Kreissägeblattes mit folgenden Schritten:
- Auflegen einer Vielzahl von fadenförmigen Körpern (3) auf eine erste kreisförmige Scheibe (1) aus plastischem Material derart, dass jeder der fadenförmigen Körper in Radialrichtung ausgerichtet ist,
- Auflegen einer zweiten kreisförmigen Scheibe (2) aus plastischem Material auf die erste Scheibe und die fadenförmigen Körper,
- Ausüben von Druck (P) auf die zweite Scheibe in Richtung der ersten Scheibe zur Bildung eines zusammengedrückten Scheibenpaares,
- Entfernen der fadenförmigen Körper (3) aus dem zusammengedrückten Scheibenpaar und
- Versintern des Scheibenpaares zum Erhalt eines in Radialrichtung verlaufende Kühlkanäle (5) aufweisenden Kreissägeblattes.

2. Verfahren nach Anspruch 1, **dadurch gekennzeichnet, dass** das plastische Material mit einem Plastifizierer versehenes Hartmetallpulver, mit einem Plastifizierer versehenes Keramikpulver oder mit einem Plastifizierer versehenes Stahlpulver ist.

3. Verfahren nach Anspruch 1 oder 2, **dadurch gekennzeichnet, dass** die fadenförmigen Körper (3) aus einem Material bestehen, welches sich bei Anwendung einer hohen Temperatur verflüchtigt, und dass das Entfernen der fadenförmigen Körper aus dem zusammengedrückten Scheibenpaar durch Anwendung der hohen Temperatur erfolgt.

4. Verfahren nach Anspruch 1 oder 2, **dadurch ge** - **kennzeichnet**, dass die fadenförmigen Körper (3) aus einem Material bestehen, welches sich bei Anwendung einer hohen Temperatur verflüssigt, und dass das Entfernen der fadenförmigen Körper aus dem zusammengedrückten Scheibenpaar durch Anwendung der hohen Temperatur erfolgt.

5. Verfahren nach Anspruch 1 oder 2, **dadurch ge** - **kennzeichnet**, dass das Entfernen der fadenförmigen Körper (3) aus dem zusammengedrückten Scheibenpaar durch ein Herausziehen der fadenförmigen Körper aus dem zusammengedrückten Scheibenpaar erfolgt.

6. Verfahren nach einem der vorhergehenden Ansprüche, **dadurch gekennzeichnet, dass** vor oder nach dem Versintern des Scheibenpaares (1, 2) eine zentrale Bohrung (4) in das Scheibenpaar eingebracht wird.

7. Verfahren nach einem der vorhergehenden Ansprüche, **dadurch gekennzeichnet, dass** vor oder nach dem Versintern des Scheibenpaares (1, 2) an deren Außenumfang Zähne in das Scheibenpaar eingebracht werden.

8. Verfahren nach einem der vorhergehenden Ansprüche, **dadurch gekennzeichnet, dass** weitere fadenförmige Körper (3a) auf die erste Scheibe (1) derart aufgelegt werden, dass jeder dieser fadenförmigen Körper in Umfangsrichtung der ersten Scheibe ausgerichtet ist.

9. Kreissägeblatt mit in Radialrichtung verlaufenden Kühlkanälen (5), welches einteilig ist, aus Hartmetall, Stahl oder Keramik besteht und durch Versinterung hergestellt ist.

10. Kreissägeblatt nach Anspruch 9, **dadurch gekennzeichnet, dass** die Kühlkanäle (5) jeweils über ihre gesamte Länge dieselbe Querschnittsfläche aufweisen.

11. Kreissägeblatt nach Anspruch 9 oder 10, **dadurch gekennzeichnet, dass** die Kühlkanäle jeweils eine kreisförmige, ovale oder eckige Querschnittsfläche aufweisen.

12. Kreissägeblatt nach einem der Ansprüche 9 - 11, **dadurch gekennzeichnet, dass** einer, mehrere oder alle seiner Kühlkanäle einen Durchmesser aufweisen, für den gilt: D ≤ 3 mm.

13. Kreissägeblatt nach einem der Ansprüche 9 - 12, **dadurch gekennzeichnet, dass** es einen oder mehrere in Umfangsrichtung verlaufende Kühlkanäle (5a) aufweist, durch welche radial verlaufende Kühlkanäle (5) miteinander verbunden sind.

14. Kreissägeblatt nach Anspruch 13, **dadurch gekennzeichnet, dass** es in Radialrichtung verlaufende, sich von einer zentralen Bohrung (4) bis zu den in Umfangsrichtung verlaufenden Kühlkanälen (5a) erstreckende Kühlkanäle (5b) aufweist, deren Querschnittsfläche größer ist als die Querschnittsfläche der in Umfangsrichtung verlaufenden Kühlkanäle (5a) und/oder größer ist als die Querschnittsfläche weiterer, in Radialrichtung verlaufender, sich von den in Umfangsrichtung verlaufenden Kühlkanälen (5a) bis zum Außenrand des Kreissägeblattes erstreckender Kühlkanäle (5).

15. Kreissägeblatt nach Anspruch 13 oder 14, **dadurch gekennzeichnet, dass** die Querschnittsfläche der in Umfangsrichtung verlaufenden Kühlkanäle (5a) größer ist als die Querschnittsfläche der in Radialrichtung verlaufenden Kühlkanäle (5).

16. Kreissägeblatt nach einem der Ansprüche 9 - 15, **dadurch gekennzeichnet, dass** es in seinem radial inneren Bereich mit einer in Umfangsrichtung verlaufenden Nut (6) versehen ist, durch welche radial verlaufende Kühlkanäle miteinander verbunden sind.

## Claims

1. Method of producing a circular saw blade having cooling channels, comprising the following steps:
- placing a plurality of thread-shaped bodies (3) on a first circular disc (1) of plastic material in such a manner that each of the thread-shaped bodies is oriented in radial direction,
- placing a second circular disc (2) of plastic material on the first disc and the thread-shaped bodies,
- exertion of pressure (P) on the second disc in the direction of the first disc for formation of the compressed disc pair,
- removal of the thread-shaped bodies (3) from the compressed disc pair and
- sintering of the disc pair to obtain a circular saw blade having cooling channels (5) running in radial direction.

2. Method according to claim 1, **characterised in that** the plastic material is hard metal powder provided with a plasticiser, ceramic powder provided with a plasticiser or steel powder provided with plasticiser.

3. Method according to claim 1 or 2, **characterised in that** the thread-shaped bodies (3) consist of a material which volatilises on application of a high temperature and that the removal of the thread-shaped bodies from the compressed disc pair is carried out by application of the high temperature.

4. Method according to claim 1 or 2, **characterised in that** the thread-shaped bodies (3) consist of a material which liquefies on application of a high temperature and that the removal of the thread-shaped bodies from the compressed disc air is carried out by application of the high temperature.

5. Method according to claim 1 or 2, **characterised in that** the removal of the thread-shaped bodies (3) from the compressed disc pair is carried out by pulling the thread-shaped bodies out of the compressed disc air.

6. Method according to any one of the preceding claims, **characterised in that** a central bore (4) is formed in the disc pair (1, 2) before or after sintering of the disc pair.

7. Method according to any one of the preceding claims, **characterised in that** teeth are formed in the disc pair (1, 2) at the outer circumference thereof before or after sintering of the disc pair (1, 2).

8. Method according to any one of the preceding claims, **characterised in that** further thread-shaped bodies (3a) are placed on the first disc (1) in such a manner that each of these thread-shaped bodies is oriented in circumferential direction of the first disc.

9. Circular saw blade with cooling channels (5) running in radial direction, which blade is of unitary construction, consists of hard metal, steel or ceramic and is produced by sintering.

10. Circular saw blade according to claim 9, **characterised in that** the cooling channels (5) respectively have the same cross-sectional area over the entire length of thereof.

11. Circular saw blade according to claim 9 or 10, **characterised in that** the cooling channels each have a circular, an oval or a polygonal cross-sectional area.

12. Circular saw blade according to any one of claims 9 to 11, **characterised in that** one, several or all of its cooling channels has or have a diameter for which D ≤ 3 mm applies.

13. Circular saw blade according to any one of claims 9 to 12, **characterised in that** it has one or more cooling channels (5a) which run in circumferential direction and by which radially extending cooling channels (5) are connected together.

14. Circular saw blade according to claim 13, **characterised in that** it has cooling channels (5b) which run in radial direction and extend from a central bore (4) to the cooling channels (5a) running in circumferential direction and the cross-sectional area of which is greater than the cross-sectional area of the cooling channels (5a) running in circumferential direction and/or greater than the cross-sectional area of further cooling channels (5) which run in radial direction and extend from the cooling channels (5a) - which run in circumferential direction - to the outer edge of the circular saw blade.

15. Circular saw blade according to claim 13 or 14, **characterised in that** the cross-sectional area of the cooling channels (5a) running in circumferential direction is greater than the cross-sectional area of the cooling channels (5) running in radial direction.

16. Circular saw blade according to any one of claims 9 to 15, **characterised in that** it is provided in its radially inner region with a groove (6) which runs circumferential direction and by which radially extending cooling channels are connected together.

## Revendications

1. Procédé pour fabriquer une lame de scie circulaire comportant des canaux de refroidissement avec les étapes suivantes :
- placement d'une pluralité de corps (3) filiformes sur un premier disque circulaire (1) en matériau plastique de telle sorte que chacun des corps filiformes soit orienté dans le sens radial,
- placement d'un second disque circulaire (2) en matériau plastique sur le premier disque et les corps filiformes,
- exercice de pression (P) sur le second disque en direction du premier disque pour la formation d'une paire de disques comprimée,
- retrait des corps filiformes (3) de la paire de disques comprimée et
- frittage de la paire de disques pour obtenir une lame de scie circulaire comportant des canaux de refroidissement (5) s'étendant dans le sens radial.

2. Procédé selon la revendication 1, **caractérisé en ce que** le matériau plastique est une poudre de métal dur pourvue d'un plastifiant, d'une poudre céramique pourvue d'un plastifiant ou d'une poudre d'acier pourvue d'un plastifiant.

3. Procédé selon la revendication 1 ou 2, **caractérisé en ce que** les corps filiformes (3) se composent d'un matériau qui se volatilise lors de l'application d'une température élevée et **en ce que** le retrait des corps filiformes de la paire de disques comprimée est effectué par application de température élevée.

4. Procédé selon la revendication 1 ou 2, **caractérisé en ce que** les corps filiformes (3) se composent d'un matériau qui se liquéfie lors de l'application d'une température élevée et **en ce que** le retrait des corps filiformes de la paire de disques comprimée est effectué par application de température élevée.

5. Procédé selon la revendication 1 ou 2, **caractérisé en ce que** le retrait des corps filiformes (3) de la paire de disques comprimée est effectué par extraction des corps filiformes de la paire de disques comprimée.

6. Procédé selon l'une quelconque des revendications précédentes, **caractérisé en ce qu'**avant ou après le frittage de la paire de disques (1, 2), un perçage central (4) est introduit dans la paire de disques.

7. Procédé selon l'une quelconque des revendications précédentes, **caractérisé en ce qu'**avant ou après le frittage de la paire de disques (1, 2) sur sa périphérie extérieure, des dents sont introduites dans la paire de disques.

8. Procédé selon l'une quelconque des revendications précédentes, **caractérisé en ce que** d'autres corps filiformes (3a) sont placés sur le premier disque (1) de telle sorte que chacun de ces corps filiformes soit orienté dans le sens périphérique du premier disque.

9. Scie circulaire avec des canaux de refroidissement (5) s'étendant dans le sens radial qui est d'un seul tenant, se compose de métal dur, d'acier ou de céramique et est fabriquée par frittage.

10. Scie circulaire selon la revendication 9, **caractérisée en ce que** les canaux de refroidissement (5) présentent chacun sur toute leur longueur la même aire de section.

11. Scie circulaire selon la revendication 9 ou 10, **caractérisée en ce que** les canaux de refroidissement présentent chacun une aire de section circulaire, ovale ou polygonale.

12. Scie circulaire selon l'une quelconque des revendications 9 à 11, **caractérisée en ce qu'**un, plusieurs ou tous ses canaux de refroidissement présentent un diamètre pour lequel s'applique : D ≤ 3 mm.

13. Scie circulaire selon l'une quelconque des revendications 9 à 12, **caractérisée en ce qu'**elle comporte un ou plusieurs canaux de refroidissement (5a) s'étendant dans le sens périphérique, par lesquels sont reliés des canaux de refroidissement (5) s'étendant radialement les uns avec les autres.

14. Scie circulaire selon la revendication 13, **caractérisée en ce qu'**elle comporte des canaux de refroidissement (5b) s'étendant dans le sens radial, s'étendant depuis un perçage central (4) jusqu'aux canaux de refroidissement (5a) s'étendant dans le sens périphérique, dont l'aire de section est plus grande que l'aire de section des canaux de refroidissement (5a) s'étendant dans le sens périphérique et/ou est plus grande que l'aire de section d'autres canaux de refroidissement (5) s'étendant dans le sens radial, s'étendant des canaux de refroidissement (5a) s'étendant dans le sens périphérique jusqu'au bord extérieur de la scie circulaire.

15. Scie circulaire selon la revendication 13 ou 14, **caractérisée en ce que** l'aire de section des canaux de refroidissement (5a) s'étendant dans le sens périphérique est plus grande que l'aire de section des canaux de refroidissement (5) s'étendant dans le sens radial.

16. Scie circulaire selon l'une quelconque des revendications 9 à 15, **caractérisée en ce qu'**elle est pourvue dans sa zone radialement intérieure d'une rainure (15) s'étendant dans le sens périphérique, par laquelle sont reliés des canaux de refroidissement s'étendant radialement les uns avec les autres.
